# EUROPÄISCHE PATENTSCHRIFT

(11) **EP 2 427 519 B1**
(45) Veröffentlichungstag und Bekanntmachung des Hinweises auf die Patenterteilung: **09.04.2014**
(21) Anmeldenummer: 10717626.5
(22) Anmeldetag: 28.04.2010
(51) Int. Cl.: C08L 83/04, C09D 183/04, B60R 21/16, D06M 15/643, D06N 3/12, D06N 3/00

(54) **ZUSAMMENSETZUNGEN FÜR TEXTILBESCHICHTUNGEN**
COMPOSITIONS FOR TEXTILE COATINGS
COMPOSITIONS POUR LE REVETEMENT DES MATIERES TEXTILES

(30) Priorität: 05.05.2009 DE 102009002828
(43) Veröffentlichungstag der Anmeldung: 14.03.2012
(73) Patentinhaber: Wacker Chemie AG, 81737 München (DE)
(72) Erfinder: PESCHKO, Christian, 84489 Burghausen (DE); MÜLLER, Johann, 84524 Neuötting (DE)
(74) Vertreter: Deffner-Lehner, Maria
(86) Internationale Anmeldenummer: PCT/EP2010/055696
(87) Internationale Veröffentlichungsnummer: WO 2010/127977

(56) Entgegenhaltungen:
- EP-A1- 1 785 454
- EP-A2- 0 186 439
- WO-A1-01/12895
- US-A- 4 082 726
- US-A- 4 569 980
- US-A- 5 208 097
- US-A- 5 767 193
- US-A- 5 854 344
- US-B1- 6 472 078
- L.N. LEWIS ET AL.: "Platinum Catalysts Used in the Silicones Industry", PLATINUM METALS REV., vol. 41, no. 2, 1997, pages 66-75,

## Beschreibung

Die Erfindung betrifft Zusammensetzungen enthaltend Organopolysiloxane mit Si-gebundenen Hydroxygruppen und Organopolysiloxane mit Si-gebundenen Wasserstoffatomen sowie ein Verfahren zu deren Herstellung. Die Erfindung betrifft weiterhin Formkörper, wie Beschichtungen, aus diesen Zusammensetzungen, ein Verfahren zur Herstellung von Beschichtungen auf Substraten, wie textilen Flächengebilden, sowie die beschichteten textilen Flächengebilde.

Die Bildung von Silikonnetzwerken durch die Reaktion von SiOHfunktionellen und SiH-funktionellen Organopolysiloxanen ist seit langem bekannt.

US 3,922,443 A beschreibt eine Zusammensetzung aus OH-terminierten Diorganopolysiloxanen und Organohydrogenpolysiloxanen, die bevorzugt zur Papierbeschichtung angewendet wird, und bis zu 1000 ppm eines Platinmetall-Halogenids als Katalysator enthält.

US 4,071,644 A beschreibt eine lösemittelfreie Zusammensetzung aus OH-terminierten Diorganopolysiloxanen und Organohydrogenpolysiloxanen zur Herstellung von Trennbeschichtungen, die bevorzugt durch einen Zinn-haltigen Katalysator vernetzt wird.

US 4,028,298 A beschreibt Antihaftbeschichtungen aus Siloxanabmischungen, die mittels Kondensationsreaktion von OH-terminierten Diorganopolysiloxanen und Organohydrogenpolysiloxanen vernetzen, welche einen Pt(II)-Chlorid-Komplex mit Phosphorsäuretrisamid-Liganden als Katalysator enthalten.

US 4,262,107 A beschreibt eine mittels Kondensationsreaktion von OH-terminierten Diorganopolysiloxanen und Organohydrogenpolysiloxanen vernetzende Siloxanabmischung, die einen Rhodiumbasierten Katalysator enthält.

EP 0103639 A1 beschreibt eine lösemittelfreie Zusammensetzung aus OH-terminierten Diorganopolysiloxanen und Organohydrogenpolysiloxanen zur Herstellung von Trennbeschichtungen, die zur Beschleunigung der Kondensationsreaktion einen Vinyl-terminierten Polysiloxangummi von hohem Molekulargewicht (200.000 - 400.000 g/mol; 0.5 Gew.-%) enthält.

EP 0186439 A2 beschreibt eine mittels Kondensationsreaktion von OH-terminierten Diorganopolysiloxanen (100 mPas-100.000 Pas) und Organohydrogenpolysiloxanen (1-100 mPas) vernetzende Siloxanabmischung, die ein Platin-Metall als Katalysator, sowie bis(2-Methoxyisopropyl)maleat als Inhibitor enthält.

US 5,036,117 A beschreibt eine mittels Kondensationsreaktion von OH-terminierten Diorganopolysiloxanen und Organohydrogenpolysiloxanen vernetzende Siloxanabmischung, die vorzugsweise 100 bis 300 ppm eines Platinkatalysators, einen Malein- bzw. Fumarsäurediester als Inhibitor, sowie eine organische Verbindung (z.B. einen primären oder sekundären Alkohol) als Topfzeitverlängerer enthält.

US 2007/0027286 A1 beschreibt eine mittels Kondensationsreaktion von OH-terminierten Diorganopolysiloxanen und Organohydrogenpolysiloxanen vernetzende Siloxanabmischung, die einen Iridium-Komplex als Katalysator enthält.

US 5,705,445 A beschreibt wässrige Silikonemulsionen zur Beschichtung von Textilien, die durch Emulsionspolymerisation von SiOH-Gruppen tragenden Polysiloxanen mit SiH-Gruppen tragenden Polysiloxanen gebildet werden und die als Haftvermittler bis zu 20 Gew.-% reaktiver Organoalkoxysilane enthalten welche beispielsweise Carboxyl-, Epoxy- oder Amidogruppen tragen.

WO 2006/083339 A1 beschreibt eine harzgefüllte, additionsvernetzende Silikonabmischung zur Beschichtung von Textiloberflächen, der neben den Netzwerk-bildenden Sil(ox)anen haftvermittelnde Additive, bevorzugt als Kombination verschiedener Verbindungen, zugesetzt sind. Diese Stoffe umfassen hochreaktive Silane, wie beispielsweise (Meth)acryloxy-funktionelle Alkoxysilane oder Epoxyfunktionelle Alkoxysilane.

US 2007/054137 A beschreibt additionsvernetzende Silikonzusammensetzungen, die auch kondensationsvernetzende Reaktionspartner, wie beispielsweise SiOH-Gruppen tragende Polysiloxane enthalten. Neben Platin-basierten Katalysatoren sind auch Kondensationskatalysatoren, bevorzugt in Form von Zirkon- oder Titan-Verbindungen, sowie hochreaktive Silane wie beispielsweise Vinyl-, Epoxy-, Acryl- oder Acetoxy-haltige Alkoxysilane als Haftvermittler enthalten.

US 2005/205829 A1 beschreibt Silikonbeschichtungen für Textiloberflächen, die zur Erniedrigung des Reibungskoeffizienten Polyamidharz-Partikel oder bis zu 60 Gew.-% Siloxanharze und bis zu 30 Gew.-% CaCO3 enthalten und die als Haftvermittler beispielsweise Epoxy- oder Alkoxyfunktionelle Silane enthalten.

WO 2006/134400 A1 beschreibt kondensations- bzw. additionsvernetzende Organopolysiloxan-Zusammensetzungen, die als Füllstoff Kaolin enthalten und die als Haftvermittler beispielsweise Epoxy- oder Alkoxyfunktionelle Silane enthalten können.

WO 02/061200 A1 beschreibt ein Verfahren zur Textilbeschichtung mit Silikonen, bei dem die Beschichtung in zwei Schritten aufgebracht wird um eine gute Haftung zum textilen Untergrund, sowie eine Oberfläche mit möglichst geringem Reibungskoeffizienten zu erhalten.

WO 01/12895 A1 beschreibt Silikonbeschichtungen von maximal 15 g/m², die neben nichtverstärkenden Füllstoffen optional einen verstärkenden Füllstoff wie Silika in einer Menge von maximal 3 Gew.-% enthalten, um möglichst niedrige Reibungskoeffizienten auf beschichteten Geweben zu erhalten.

EP 0953675 A2 beschreibt Silikonzusammensetzungen für Textilbeschichtungen, die neben einem verstärkenden Füllstoff, wie beispielsweise hydrophobierter Kieselsäure, noch zusätzlich einen weiteren Füllstoff in mindestens doppelter Menge bezogen auf den verstärkenden Füllstoff von laminarer Gestalt enthalten, um möglichst niedrige Reibungskoeffizienten auf beschichteten Geweben zu erhalten.

Die bekannten Zusammensetzungen weisen eine Reihe von Nachteilen auf. Beispielsweise kommen sehr teure Verbindungen wie Rhodium oder größere Mengen von Platin als Katalysatoren zum Einsatz. Die Verwendung ökologisch bedenklicher oder giftiger Stoffe wie Zinnverbindungen oder Phosphorsäuretrisamid-Liganden sind ebenso nachteilig, wie das Erfordernis von Zusatzstoffen die zum Erreichen der gewünschten Eigenschaften der Mischungen zugesetzt werden, wie beispielsweise Vinyl-funktionelle Polysiloxane zur schnelleren Aushärtung, oder primäre bzw. sekundäre Alkohole als Topfzeitregler.
Die oftmals als sog. Haftvermittler zugesetzten Silan-Verbindungen, mit hydrolysierbaren oder anderen reaktiven Gruppen, erhöhen die Kosten solcher Systeme und haben zudem den Nachteil, dass sie in Mischungen mit Füllstoffen, wie beispielsweise hochdisperser Kieselsäure, eine z. T. erhebliche Zunahme der Viskosität verursachen. Dadurch wird die Verarbeitbarkeit der Mischungen erschwert oder gar für gewisse Verarbeitungsmethoden, die ein gutes Fließverhalten erfordern, undurchführbar.
Zusammensetzungen, die neben Verbindungen aus der Platingruppe weitere Katalysatoren enthalten, welche Kondensationsreaktionen von Hydroxysil(ox)an- bzw. Alkoxysil(ox)an-Verbindungen beschleunigen (z. B. Zirkon- oder Titan-Verbindungen), haben den Nachteil, dass die Topfzeit für viele Anwendungen zu gering ist, bzw. eine Viskositätszunahme verursacht wird. Dadurch wird die Verarbeitbarkeit solcher Mischungen erschwert oder gar für gewisse Verarbeitungsmethoden, die eine ausreichend lange Topfzeit und/oder gutes Fließverhalten erfordern, undurchführbar.
Nachteilig sind auch solche Verfahren, die die Silikonschicht in mehreren Arbeitsschritten auf den textilen Träger aufbringen, da diese Arbeitsweisen Zeit- und Kosten-intensiver sind als solche, bei denen die gesamte Silikonschicht auf einmal auf die Textiloberfläche gebracht wird.

Aufgabe der Erfindung ist es daher, die oben genannten Nachteile zu beseitigen und den Stand der Technik zu verbessern, insbesondere eine Zusammensetzung zur Verfügung zu stellen, die möglichst einfach formulierbar und verarbeitbar ist und Beschichtungen mit niedrigen Reibungskoeffizienten sowie guter Haftung auf Substraten, insbesondere auf textilen Substraten, liefert und ein Verfahren zur Verfügung zu stellen, um die erfindungsgemäße Zusammensetzung möglichst einfach für die Beschichtung von textilen Oberflächen anzuwenden.
Die Aufgabe wird durch die Erfindung gelöst.

Gegenstand der Erfindung sind Zusammensetzungen bestehend aus
(A) Organopolysiloxane der allgemeinen Formel Ia

   HOR¹₂SiO(R¹₂SiO)ₙSiR¹₂OH (Ia)

   wobei
   **R¹** C₁- bis C₁₀-Alkylreste, α- und β-Phenylethylrest, Benzylrest, 2,4-Diethylbenzylrest, Phenylrest und der Naphthylrest bedeuten und
   **n** n eine ganze Zahl von 10 bis 5.000, vorzugsweise 100 bis 2.000, ist,
(B) Organopolysiloxane, die Si-gebundene Wasserstoffatome aufweisen,
(C) Platinkatalysatoren,
(D) verstärkende Füllstoffe,
(E) gegebenenfalls nichtverstärkende Füllstoffe, und
(F) gegebenenfalls Inhibitoren, die eine platinkatalysierte

Reaktion von Si-gebundenen Hydroxygruppen und Si-gebundenen Wasserstoffatomen bei Raumtemperatur verzögern,
mit der Maßgabe, dass die Organopolysiloxane (A) Viskositäten von 500 bis 100 000 000 mPa.s bei 25°C aufweisen, dass die Platinkatalysatoren (C) frei von Phosphorsäuretrisamid-Liganden sind,
dass die verstärkenden Füllstoffe (D) in Mengen von mindestens 3 Gew.-%, bezogen auf das Gesamtgewicht der Zusammensetzungen, enthalten sind,
dass nichtverstärkende Füllstoffe (F) in geringeren Mengen als die verstärkenden Füllstoffe (D) enthalten sind.

Beispiele für Alkylreste **R¹** sind der Methyl-, Ethyl-, n-Propyl, iso-Propyl-, n-Butyl-, iso-Butyl-, tert.-Butyl-, n-Pentyl-, iso-Pentyl-, neo-Pentyl-, tert.-Pentylrest; Hexylreste, wie der n-Hexyl- und Cyclohexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Cycloalkylreste, wie der Cyclohexylrest.

Vorzugsweise bedeutet **R¹** C₁- bis C₆-Alkylrest und Phenylrest, insbesondere Methyl- und Ethylrest, besonders bevorzugt Methylrest.

Die Organopolysiloxane (A) besitzen vorzugsweise eine durchschnittliche Viskosität von mindestens 500 mPa·s, bevorzugt von 1000 mPa·s bis 10⁸ mPa·s und besonders bevorzugt von 5000 mPa·s bis 5 x 10⁶ mPa·s bei 25°C. Die Organopolysiloxane (A) können ein Molekulargewicht Mₙ (Zahlenmittel) von 186 bis 1.000.000 g/Mol aufweisen. Bevorzugt ist der Bereich von 260 bis 500.000 g/Mol. Die Formulierung kann auf einem Polymer mit enger Molekulargewichtsverteilung aufgebaut sein, es können aber auch Polymere mit verschiedenen Molekulargewichten eingesetzt werden.

Bei den erfindungsgemäß eingesetzten Organopolysiloxanen (A) kann es sich um eine einzelne Art wie auch um ein Gemisch aus mindestens zwei Arten derartiger Organopolysiloxane (A) handeln.

Organopolysiloxane (A) können in Mengen von 1 bis 95 Gew.-%, bezogen auf das Gesamtgewicht der erfindungsgemäßen Zusammensetzung, enthalten sein. Bevorzugt können sie in Mengen von 50 bis 90 Gew.-% enthalten sein

Als Organopolysiloxane (B) werden vorzugsweise lineare oder verzweigte Organopolysiloxane aus Einheiten der allgemeinen Formel II 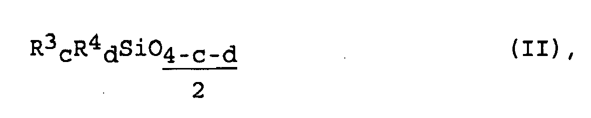 eingesetzt, wobei
**R³** einwertige, aliphatische, gegebenenfalls substituierte C₁-bis C₁₀-Kohlenwasserstoffreste,
**R⁴** Wasserstoff,
**c** die Werte 0, 1, 2 oder 3 und
**d** die Werte 0, oder 1 bedeuten,
mit der Maßgabe, dass die Summe c+d ≤ 3 ist, und dass durchschnittlich mindestens 2 Reste **R⁴** je Molekül vorliegen.

Die Organopolysiloxane (B) können seitenständige und/oder endständige Si-gebundene Wasserstoffatome aufweisen.

Beispiele für unsubstituierte Kohlenwasserstoffreste **R³** sind C₁- bis C₁₀-Alkyl-, C₁- bis C₁₀-Alkaryl- oder C₁- bis C₁₀-Aralkylreste deren Alkylteil gesättigt ist, oder C₁- bis C₁₀-Arylreste. Beispiele für Alkylreste **R³** sind der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest; Hexylreste, wie der n-Hexyl- und Cyclohexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Cycloalkylreste, wie der Cyclohexylrest. Beispiele für Alkarylreste **R³** sind der α- und β-Phenylethylrest; Beispiele für Aralkylreste **R³** sind der Benzylrest und der 2,4-Diethylbenzylrest; Beispiele für Arylreste **R³** sind der Phenylrest und der Naphthylrest.
Vorzugsweise bedeutet **R³** einen C₁- bis C₆-Alkylrest und Phenylrest, insbesondere Methyl- und Ethylrest.

Beispiele für substituierte Kohlenwasserstoffreste **R³** sind der 3,3,3-Trifluor-n-propylrest, der 2,2,2,2',2',2'-Hexafluorisopropylrest, der Heptafluorisopropylrest, der 3-Chlor-n-propylrest, der 2-Ethylbromidrest, der 3-Propylbromidrest und der 3-Glycidoxypropylrest.

Vorzugsweise weisen die Organopolysiloxane (B) mindestens 90, insbesondere mindestens 95 Mol-% Einheiten der allgemeinen Formel II auf, in denen die Summe c+d = 2 beträgt.

Vorzugsweise weisen die Organopolysiloxane (B) zwischen 5 und 100 Mol-%, bevorzugt zwischen 20 und 100 Mol-% Einheiten der allgemeinen Formel II auf, in denen die Summe c+d = 2 beträgt und d den Wert 1 hat.

Die Organopolysiloxane (B), die Si-gebundene Wasserstoffatome aufweisen, besitzen vorzugsweise mindestens 2 SiH-Bindungen pro Molekül. Vorzugsweise besitzen sie mehr seitenständige (=laterale) als endständige (=terminale) SiH-Bindungen. Die Organopolysiloxane (B) besitzen vorzugsweise eine durchschnittliche Viskosität von 0,25 mPa·s und 10.000 mPa·s, bevorzugt von 5 mPa·s bis 5.000 mPa·s und besonders bevorzugt von 10 mPa·s bis 1.000 mPa·s bei 25°C. Die Organopolysiloxane (B) können ein Molekulargewicht Mₙ (Zahlenmittel) von 130 bis 1.000.000 g/Mol aufweisen. Bevorzugt ist der Bereich von 500 bis 100.000 g/Mol. Ganz besonders bevorzugt ist der Bereich von 1.000 bis 10.000 g/Mol. Die Formulierung kann auf einem Polymer mit enger Molekulargewichtsverteilung aufgebaut sein, es können aber auch Polymere mit verschiedenen Molekulargewichten eingesetzt werden.

Bei dem erfindungsgemäß eingesetzten, SiH-Bindungen aufweisenden Organopolysiloxan (B) kann es sich um eine einzelne Art wie auch um ein Gemisch aus mindestens zwei Arten derartiger SiH-Bindungen aufweisender Organopolysiloxane handeln.

Bevorzugt sind die Organopolysiloxane (B) solche der allgemeinen Formel IIa

H_{g}R¹_{3-g}SiO (R¹₂SiO)ₖ(R¹HSiO)₁SiR¹_{3-g}H_{g}, (IIa)

wobei R¹ die oben dafür angegebene Bedeutung hat,
g 0 oder 1, vorzugsweise 0 ist,
k 0 oder eine ganze Zahl von 1 bis 500, vorzugsweise 0 bis 300, ist
1 0 oder eine ganze Zahl von 1 bis 200, vorzugsweise 10 bis 100, ist,
mit der Maßgabe, dass die Summe 1+k eine ganze Zahl von 1 bis 500 ist
und dass durchschnittlich je Molekül mindestens 2 Si-gebundene Wasserstoffatome enthalten sind.

Im Rahmen dieser Erfindung soll Formel (IIa) so verstanden werden, dass k Einheiten -(R¹₂SiO)- und 1 Einheiten -(R¹HSiO)-in beliebiger Weise, beispielsweise als Block oder statistisch, im Organopolysiloxanmolekül verteilt sein können.

Organopolysiloxane (B) können in Mengen von 0,05 bis 30 Gew.-%, bevorzugt in Mengen von 0,1 bis 20 Gew.-%, besonders bevorzugt in Mengen von 0,5 bis 10 Gew.-%, jeweils bezogen auf das Gesamtgewicht an eingesetztem Organopolysiloxan (A) eingesetzt werden.

Die erfindungsgemäßen Zusammensetzungen können die Komponenten (A) und (B) in unterschiedlichen Mengenverhältnissen enthalten. Dabei kann das stöchiometrische Mol-Verhältnis aus der Menge von SiOH-Gruppen die aus der Komponente (A) stammen zur Menge von SiH-Gruppen die aus der Komponente (B) stammen von 10 zu 1 bis 1 zu 100 betragen. Bevorzugt beträgt das stöchiometrische Mol-Verhältnis von SiOH-Gruppen zu SiH-Gruppen von 1 zu 1 bis 1 zu 70, ganz besonders bevorzugt von 1 zu 10 bis 1 zu 50.

Als Platinkatalysatoren (C) werden Platin und/oder dessen Verbindungen eingesetzt. Beispiele für solche Katalysatoren sind metallisches und fein verteiltes Platin, das sich auf Trägern, wie Siliziumdioxid, Aluminiumoxid oder Aktivkohle befinden kann, Verbindungen oder Komplexe von Platin, wie Platinhalogenide, z.B. PtCl₄, H₂PtCl₆*6H₂O, Na₂PtCl₄*4H₂O, Platin-Phosphin-Komplexe, Platin-Olefin-Komplexe, Platin-Alkin-Komplexe, Platin-Alkohol-Komplexe, Platin-Alkoholat-Komplexe, Platin-Ether-Komplexe, Platin-Aldehyd-Komplexe, Platin-Keton-Komplexe, einschließlich Umsetzungsprodukten aus H₂PtCl₆*6H2O und Cyclohexanon, Platin-Vinylsiloxankomplexe, insbesondere Platin-Divinyltetramethyldisiloxankomplexe mit oder ohne Gehalt an nachweisbarem anorganisch gebundenen Halogenen, Bis-(gammapicolin)-platindichlorid sowie Umsetzungsprodukte von Platintetrachlorid mit Olefin und primärem Amin oder sekundärem Amin oder primärem Amin und sekundärem Amin, wie das Umsetzungsprodukt aus in 1-Octen gelöstem Platintetrachlorid mit sec.-Butylamin, oder Ammonium-Platinkomplexe, Platinkatalysatoren für 1-K-Systeme, wie microverkapselte Platinkomplexe oder z.B. Platin-Acetylid-Komplexe.

Der Platinkatalysator wird vorzugsweise in Mengen von 0,5 bis 500 Gewichts-ppm (Gewichtsanteile je Million Gewichtsteilen), insbesondere 2 bis 400 Gewichts-ppm und ganz besonders bevorzugt von 5 bis 100 Gewichts-ppm jeweils berechnet als elementares Platin und bezogen auf das Gesamtgewicht der Komponenten (A) und (B) eingesetzt.

Als verstärkende Füllstoffe (D) werden bevorzugt pyrogen hergestellte Kieselsäure oder gefällte Kieselsäure eingesetzt. Besonders bevorzugt wird pyrogen hergestellte Kieselsäure, die z.B. durch Behandlung mit Organosilanen oder Halogensilanen (analog EP 378 785 B1) teilweise oder vollständig hydrophobiert ist und eine bevorzugte BET-Oberfläche von mindestens 50 m²/g, insbesondere mindestens 100 m²/g, besonders bevorzugt von mindestens 120 m²/g hat, eingesetzt. Die Menge des Füllstoffs kann 3 bis 60 Gew.-% der gesamten erfindungsgemäßen Zusammensetzung ausmachen, wobei bevorzugt 5 bis 45 Gew.-% und besonders bevorzugt 10 bis 40 Gew.-% sind.

Zusätzlich kann die Zusammensetzung auch nichtverstärkende Füllstoffe (E) wie beispielsweise Quarz, Calciumcarbonat, Diatomeenerde, oder Perlite in Mengen enthalten, die jeweils geringer sind als die Menge des verstärkenden Füllstoffes (D).

Nichtverstärkende Füllstoffe (E) können in Mengen von 1 bis 90 Gew.-Teile je 100 Gew.-Teile verstärkende Füllstoffe (D) eingesetzt werden, wobei deren Mitverwendung nicht bevorzugt ist.

Als Inhibitoren (F) werden die dem Fachmann bekannten Verbindungen eingesetzt, welche die durch Platinkatalysatoren (C) katalysierten Reaktionen der Reaktionspartner (A) und (B) bei Raumtemperatur verlangsamen bzw. unterbinden. Beispiele hierfür sind acetylenisch ungesättigte Alkohole, wie 3-Methyl-1-butin-3-ol, 1-Ethinylcyclohexan-1-ol, 3,5-Dimethyl-1-hexin-3-ol und 3-Methyl-1-pentin-3-ol. Beispiele für Inhibitoren auf Vinylsiloxanbasis sind 1,1,3,3-Tetramethyl-1,3-divinylsiloxan und vinylgruppenhaltige Poly-, Oligo- und Disiloxane. Beispiele für Inhibitoren auf Basis ungesättigter Dicarbonsäuren sind Fumarsäurediester oder Maleinsäurediester wie beispielsweise Bis(2-Methoxyisopropyl)maleat.

Der Inhibitor (F) wird vorzugsweise in Mengen von 0,01 bis 2 Gew.-%, bevorzugt 0,05 bis 1,5 Gew.-%, jeweils bezogen auf das Gesamtgewicht der erfindungsgemäßen Zusammensetzung eingesetzt.

Die erfindungsgemäßen Zusammensetzungen werden durch Vermischen der Komponenten (A), (B), (C), (D) und gegebenenfalls (E) und (F) hergestellt.
Die Reihenfolge beim Vermischen der Komponenten (A), (B), (C), (D) und gegebenenfalls (E) und (F) ist zwar nicht entscheidend, vorzugsweise wird aber die Komponente (B) dem Gemisch der anderen Komponenten zuletzt zugesetzt.

Gegenstand der Erfindung sind weiterhin Formkörper hergestellt durch Härtenlassen der erfindungsgemäßen Zusammensetzungen.

Formartikel können im Spritzguss oder Gießverfahren hergestellt werden. Aufgrund der durch die Kondensationsreaktion von SiOH-Gruppen enthaltenden Organopolysiloxanen (A) mit SiH-Gruppen enthaltenden Organopolysiloxanen (B) auftretende Freisetzung von Wasserstoff können dabei schaumartige Formkörper gefertigt werden.

Vorzugsweise werden die erfindungsgemäßen Zusammensetzungen zur Herstellung von Beschichtungen oder Überzügen verwendet.

Gegenstand der Erfindung ist daher ein Verfahren zur Herstellung von Beschichtungen durch Auftragen der erfindungsgemäßen Zusammensetzung auf das zu beschichtende Substrat und anschließende Härtung der Zusammensetzung.

Die erfindungsgemäßen Zusammensetzungen werden vorzugsweise für die Beschichtung von textilen Flächengebilden wie z. B. Gewebe, Vliese, Gestricke, Gelege, Filze, Wirkware oder Kettwirkware verwendet. Die textilen Flächengebilde können gefertigt sein aus Naturfasern wie Baumwolle, Wolle, Seide etc. oder auch aus Kunstfasern wie Polyester, Polyamid, Aramid etc. Auch aus Mineralfasern wie Glas oder Silicaten oder Metallfasern können die Textilien gefertigt sein. Auch sind Mischungen aus unterschiedlichen Fasertypen möglich.

Die mit den erfindungsgemäßen Zusammensetzungen beschichteten textilen Flächengebilde können für technische Anwendungen, wie Förderbänder, Kompensatoren, Schutzkleidung, Markisen, im Isolationsbereich oder für Airbags eingesetzt werden. Aber auch Anwendung im Hochleistungstextilbereich, wie Gleitschirme, Heißluftballons, Fallschirme, Outdoorkleidung, Sporttextilien, Freizeitkleidung, Freizeitartikel wie Zelte oder Rucksäcke, Segel und Streetwear können mit den erfindungsgemäßen Zusammensetzungen behandelt werden.

Auch zum Beschichten von Folien oder Oberflächen aus mineralischen Stoffen, Kunststoffen, Naturstoffen, Papier, Holz oder Metallen können die erfindungsgemäßen Zusammensetzungen verwendet werden.

Das Auftragen von den erfindungsgemäßen Zusammensetzungen auf die zu beschichtenden Substrate kann in beliebiger, für die Herstellung von Beschichtungen aus flüssigen Stoffen geeigneter und vielfach bekannter Weise erfolgen, beispielsweise durch Pinseln, Tauchen, Streichen, Gießen, Sprühen, Aufwalzen, Drucken, Messer- oder Rakel-Beschichtung, Foulardverfahren, Extrusionsverfahren oder Spritzverfahren.

Die textilen Flächengebilde können mit den erfindungsgemäßen Zusammensetzungen in unterschiedlichen Beschichtungsdicken belegt werden. Wegen der Bildung von gasförmigem Wasserstoff beim Aushärten der Mischung, kann die Beschichtung gezielt mit Blasen, Löchern oder Poren in definierter Größe und Verteilung gestaltet werden. Dazu kann beispielsweise die Viskosität, die Molmenge an SiH- und/oder SiOR-Gruppen, die Topfzeit oder die Schichtdicke in entsprechender Weise gewählt werden. Für die Erzeugung von geschlossenen Schichten wird die erfindungsgemäße Zusammensetzung bevorzugt in dünnen Schichten von 1 bis 50 µm aufgetragen.

Das Trocknen und Härten bzw. Vulkanisieren der erfindungsgemäßen Zusammensetzungen erfolgt bevorzugt in üblichen Wärmekanälen, die durch Heißluft oder Infrarotstrahlung oder andere Energiequellen temperiert werden können. Der bevorzugte Temperaturbereich ist 50 bis 200°C. Da einige Textilarten nicht besonders temperaturbeständig sind, wird die obere Temperaturgrenze meist durch die Temperaturbeständigkeit des Textils limitiert. Die Verweilzeit im Trockenofen ist von der Temperatur im Wärmekanal abhängig und ist bevorzugt von 10 Sekunden bis 30 Minuten.

Gewebe aus Glasfasern fransen an den Schnittstellen sehr stark aus, ein Ausfransen der Schnittkanten wird durch die Behandlung mit den erfindungsgemäßen Zusammensetzungen verhindert. Glasstaub, der durch den Bruch der feinen Glasfasern entsteht, wird durch eine Ausrüstung mit den erfindungsgemäßen Zusammensetzungen fixiert. Desweiteren zeigt ein derartig ausgerüstetes Glasgewebe elastische Eigenschaften.

Bei der Verarbeitung der erfindungsgemäßen Zusammensetzung als Textilbeschichtungen wurde überraschend festgestellt, dass die erfindungsgemäß erzeugten Silikonbeschichtungen sehr gute mechanische Eigenschaften aufweisen, die üblicherweise nur mit solchen kondensationsvernetzenden Siloxan-Mischungen erreicht werden, die sogenannte Haftvermittler wie beispielsweise niedermolekulare organofunktionelle Silane bzw. weitere die Kondensationsreaktion beschleunigende Verbindungen wie z.B. Zinn-, Zirkon- oder Titan-Verbindungen enthalten, oder wie sie von Additions-vernetzenden Siloxan-Muschungen bekannt sind. Besonders vorteilhaft sind diese überraschend festgestellten Eigenschaften für die Herstellung von silikonbeschichteten Textilgeweben, die für technische Einrichtungen, insbesondere für Airbags, verwendet werden. Für derartige Anwendungen werden bevorzugt Gewebe aus synthetischen Fasern, wie beispielsweise Polyamid oder Polyester, mit Silikon beschichtet, um Oberflächen zu erhalten, die den hohen mechanischen und thermischen Belastungen beim Aufblasen des Airbags mit einem Treibsatz standhalten. Dazu müssen die Beschichtungen sehr gut auf dem Textiluntergrund haften, müssen in einem breiten Temperaturbereich flexibel sein, dürfen beim übereinanderlegen auch bei feuchter Lagerung und/oder bei hohen Temperaturen nicht verkleben und müssen eine möglichst geringe Oberflächenreibung (geringer Reibungskoeffizient) aufweisen.

### Ausführungsbeispiele:

Die angegebenen Messwerte der beschichteten Textilflächen wurden entsprechend der zitierten ISO-Normen ermittelt. Diese Prüfmethoden sind besonders im Bereich der Herstellung technischer Textilien und im speziellen bei der Produktion von Airbags etabliert (siehe dazu auch die "Anforderungen und Prüfbedingungen Luftsack-Material", EASC 9904 0180 des European Airbag Standardization Committee, Ausgabe A08) und ermöglichen eine Bewertung der Beschichtungsstabilität mit relativ einfachen Mitteln.

Bei der Prüfmethode "Scrub" (ISO 5981) wird die Beständigkeit gegen wiederholtes und gleichzeitiges Knicken und Reiben des beschichteten Gewebes geprüft. Angegeben wird die maximale Anzahl wiederholter Deformationsbewegungen der Textilprobe (in Zyklen), die noch nicht zur Schädigung führt.
Je höher dieser Wert ist, desto besser ist die Beschichtung.

Bei der "Haftung" wird die Kraft (in N/5cm) gemessen, die benötigt wird, um zwei über die beschichteten Oberflächen miteinander fest verklebte Textilproben voneinander zu trennen, wobei sich die auf das Textil aufgebrachte Beschichtung in der Regel ablöst. Der Messwert gibt Auskunft über die Stärke der Verbindung von Textiloberfläche zu der aufgetragenen und ausgehärteten Beschichtung.
Je höher der Messwert, desto besser ist die Beschichtung.

Der Reibungskoeffizient (sog. COF, ISO 8295) ist ein Maß für die Beschaffenheit der Beschichtungsoberfläche bezüglich der Gleit- und Hafteigenschaften, wenn die Oberflächen aufeinander gelegt und gegeneinander bewegt werden. Dazu werden zwei beschichtete Textilproben mit den Beschichtungen aufeinander gelegt und mit einem Gewicht beschwert. Aus der Kraft die benötigt wird, um die obere Probe über die untere Probe zu ziehen ergibt sich der Reibungskoeffizient, der als statischer (Bewegung aus der Ruhelage) und als dynamischer (Bewegung bei Konstanter Geschwindigkeit) Wert angegeben wird.
Je niedriger diese Werte sind, desto besser ist die Beschichtung hinsichtlich einer Anwendung im Airbag-Bereich.

### Beispiel 1:

32 kg lineares Dimethylpolysiloxan mit terminalen Dimethylsilanolgruppen und einer Viskosität von 20000 mPa s bei 25°C, 24 kg lineares Dimethylpolysiloxan mit terminalen Dimethylsilanolgruppen und einer Viskosität von 80000 mPa s bei 25°C, 28 kg lineares Dimethylpolysiloxan mit terminalen Dimethylsilanolgruppen und einer Viskosität von 1000 mPa s bei 25°C werden an einem Kneter mit 16 kg hydrophobierter, hochdisperser pyrogener Kieselsäure der Type WACKER HDK® SKS-130 mit einer BET-Oberfläche von 130 m²/g unter vermindertem Druck vermischt. Anschließend werden 50 g 1-Ethinylcyclohexan-1-ol und 0,11 kg eines Platin-Divinyltetramethylsiloxan-Komplexes gelöst in Dimethylpolysiloxan (entsprechend einem Platingehalt von 12 ppm bezogen auf die Gesamtmasse der Zusammensetzung) unter stetigem Mischen zugegeben.
15 Minuten wird das Gemisch bis zur kompletten Vermischung weitergerührt.
100 g der so erhaltenen Masse werden mit 7 g eines Methylhydrogenpolysiloxanes mit Trimethylsilylendgruppen und einer Viskosität von 25 mPa s bei 25°C vermischt.
Diese Mischung wird mit einem Rakel auf ein Gewebe aus Polyamid 6.6 (470 dtex; 185 g/m² Rohgewicht) beschichtet und in einem Umluftofen binnen 2 Minuten bei 170°C vulkanisiert.
Das so beschichtete Gewebe zeigt ein Beschichtungsgewicht von 27 g/m² und weist folgende Messwerte auf:

| | |
|---|---|
| Scrub: | 1900 Zyklen (ISO 5981) |
| Haftung: | 280 N/5 cm (ISO 53530) |
| Reibungskoeffizient: | 0,2642 (statisch) |
| | 0,1614 (dynamisch) (ISO 8295) |

### Beispiel 2:

44 kg lineares Dimethylpolysiloxan mit terminalen Dimethylsilanolgruppen und einer Viskosität von 20000 mPa s bei 25°C und 44 kg lineares Dimethylpolysiloxan mit terminalen Dimethylsilanolgruppen und einer Viskosität von 80000 mPa s bei 25°C werden an einem Kneter mit 12 kg hydrophobierter, hochdisperser pyrogener Kieselsäure der Type WACKER HDK® SKS-130 mit einer BET-Oberfläche von 130 m²/g unter vermindertem Druck vermischt. Anschließend werden 50 g 1-Ethinylcyclohexan-1-ol und 0,11 kg eines Platin-Divinyltetramethylsiloxan-Komplexes gelöst in Dimethylpolysiloxan (entsprechend einem Platingehalt von 12 ppm bezogen auf die Gesamtmasse der Zusammensetzung) unter stetigem Mischen zugegeben.
15 Minuten wird das Gemisch bis zur kompletten Vermischung weitergerührt.
100 g der so erhaltenen Masse werden mit 7 g eines Methylhydrogenpolysiloxanes mit Trimethylsilylendgruppen und einer Viskosität von 25 mPa s bei 25°C vermischt.
Diese Mischung wird mit einem Rakel auf ein Gewebe aus Polyamid 6.6 (470 dtex; 185 g/m² Rohgewicht) beschichtet und in einem Umluftofen binnen 2 Minuten bei 170°C vulkanisiert.
Das so beschichtete Gewebe zeigt ein Beschichtungsgewicht von 28 g/m² und weist folgende Messwerte auf:

| | |
|---|---|
| Scrub: | 1700 Zyklen (ISO 5981) |
| Haftung: | 220 N/5 cm (ISO 53530) |
| Reibungskoeffizient: | 0,1249 (statisch) |
| | 0,0678 (dynamisch) (ISO 8295) |

### Beispiel 3:

88 kg lineares Dimethylpolysiloxan mit terminalen Dimethylsilanolgruppen und einer Viskosität von 50000 mPa s bei 25°C werden an einem Flügelrührer mit 12 kg hydrophobierter, hochdisperser pyrogener Kieselsäure der Type WACKER HDK® SKS-130 mit einer BET-Oberfläche von 130 m²/g vermischt. Anschließend werden 50 g 1-Ethinylcyclohexan-1-ol und 0,11 kg eines Platin-Divinyltetramethylsiloxan-Komplexes gelöst in Dimethylpolysiloxan (entsprechend einem Platingehalt von 12 ppm bezogen auf die Gesamtmasse der Zusammensetzung) unter stetigem Mischen zugegeben. 15 Minuten wird das Gemisch bis zur kompletten Vermischung weitergerührt.
100 g der so erhaltenen Masse werden mit 5 g eines Methylhydrogenpolysiloxanes mit Trimethylsilylendgruppen und einer Viskosität von 25 mPa s bei 25°C vermischt.
Diese Mischung wird mit einem Rakel auf ein Gewebe aus Polyamid 6.6 (470 dtex; 185 g/m² Rohgewicht) beschichtet und in einem Umluftofen binnen 2 Minuten bei 170°C vulkanisiert.
Das so beschichtete Gewebe zeigt ein Beschichtungsgewicht von 28 g/m² und weist folgende Messwerte auf:

| | | |
|---|---|---|
| Scrub: | 1800 Zyklen | (ISO 5981) |
| Haftung: | 230 N/5 cm | (ISO 53530) |
| Reibungskoeffizient: | 0.126 (statisch) | |
| | 0.065 (dynamisch) | (ISO 8295) |

### Vergleichsbeispiel 1:

12,2 kg lineares Dimethylpolysiloxan mit terminalen Dimethylvinylsilylgruppen und einer Viskosität von 900 mPa s bei 25°C, 7,3 kg lineares Dimethylpolysiloxan mit terminalen Dimethylvinylsilylgruppen und einer Viskosität von 7000 mPa s bei 25°C, 45 kg lineares Dimethylpolysiloxan mit terminalen Dimethylvinylsilylgruppen und einer Viskosität von 20400 mPa s bei 25°C, 12,5 kg lineares Dimethylpolysiloxan mit terminalen Dimethylvinylsilylgruppen und einer Viskosität von 1000 mPa s bei 25°C werden an einem Dissolver mit 19 kg hydrophobierter, hochdisperser pyrogener Kieselsäure der Type WACKER HDK® SKS-130 mit einer BET-Oberfläche von 130 m²/g vermischt. Anschließend werden 25 g 1-Ethinylcyclohexan-1-ol, 0,25 kg eines Platin-Divinyltetramethylsiloxan-Komplexes gelöst in Dimethylpolysiloxan (entsprechend einem Platingehalt von 28 ppm bezogen auf die Gesamtmasse der Zusammensetzung) und 42 g Cer-2-ethylhexanoat-Lösung (40 %ig in Naphtha) unter stetigem Mischen zugegeben.
15 Minuten wird das Gemisch bis zur kompletten Vermischung weitergerührt.
100 g der so erhaltenen Masse werden mit 1 g 3-Glycidoxypropyltriethoxysilan und 4 g eines Methylhydrogenpolysiloxanes mit Trimethylsilylendgruppen und einer Viskosität von 25 mPa s bei 25°C vermischt.
Diese Mischung wird mit einem Rakel auf ein Gewebe aus Polyamid 6.6 (470 dtex; 185 g/m² Rohgewicht) beschichtet und in einem Umluftofen binnen 2 Minuten bei 170 °C vulkanisiert.
Das so beschichtete Gewebe zeigt ein Beschichtungsgewicht von 26 g/m² und weist folgende Messwerte auf:

| | |
|---|---|
| Scrub: | 1100 Zyklen (ISO 5981) |
| Haftung: | 220 N/5 cm (ISO 53530) |
| Reibungskoeffizient: | 0,3142 (statisch) |
| | 0,1788 (dynamisch) (ISO 8295) |

## Patentansprüche

1. Zusammensetzungen bestehend aus
(A) Organopolysiloxane der allgemeinen Formel Ia
HOR¹₂SiO(R¹₂SiO)ₙSiR¹₂OH (Ia)
wobei
**R¹** C₁- bis C₁₀-Alkylreste, α- und β- Phenylethylrest, Benzylrest, 2,4-Diethylbenzylrest, Phenylrest und der Naphthylrest bedeuten und
n eine ganze Zahl von 10 bis 5.000, vorzugsweise 100 bis 2.000, ist,
(B) Organopolysiloxane, die Si-gebundene Wasserstoffatome aufweisen,
(C) Platinkatalysatoren,
(D) verstärkende Füllstoffe,
(E) gegebenenfalls nichtverstärkende Füllstoffe und
(F) gegebenenfalls Inhibitoren, die eine platinkatalysierte Reaktion von Si-gebundenen Hydroxygruppen und Si-gebundenen Wasserstoffatomen bei Raumtemperatur verzögern,
mit der Maßgabe, dass die Organopolysiloxane (A) Viskositäten von 500 bis 100 000 000 mPa.s bei 25°C aufweisen,
dass die Platinkatalysatoren (C) frei von Phosphorsäuretrisamid-Liganden sind,
dass die verstärkenden Füllstoffe (D) in Mengen von mindestens 3 Gew.-%, bezogen auf das Gesamtgewicht der Zusammensetzungen, enthalten sind,
dass nichtverstärkende Füllstoffe (E) in geringeren Mengen als die verstärkenden Füllstoffe (D) enthalten sind.

2. Verfahren zur Herstellung der Zusammensetzungen nach Anspruch 1, **dadurch gekennzeichnet, dass** die Komponenten (A), (B), (C), (D) und gegebenenfalls (E) und (F) nach Anspruch 1 miteinander vermischt werden.

3. Formkörper hergestellt durch Härtenlassen der Zusammensetzungen gemäß Anspruch 1.

4. Formkörper nach Anspruch 3, **dadurch gekennzeichnet, dass** die Härtung bei Temperaturen von 50 bis 200°C erfolgt.

5. Formkörper nach Anspruch 3 oder 4, **dadurch gekennzeichnet, dass** es sich um Beschichtungen oder Überzüge handelt.

6. Verfahren zur Herstellung von Beschichtungen durch Auftragen der Zusammensetzung gemäß Anspruch 1 auf das zu beschichtende Substrat und anschließende Härtung der Zusammensetzung.

7. Verfahren nach Anspruch 6, **dadurch gekennzeichnet, dass** die Härtung bei Temperaturen von 50 bis 200°C erfolgt.

8. Verfahren nach Anspruch 6 oder 7, **dadurch gekennzeichnet, dass** das Substrat ein textiles Flächengebilde ist.

9. Verfahren nach Anspruch 8, **dadurch gekennzeichnet, dass** das textile Flächengebilde ein Airbagmaterial ist.

10. Beschichtete textile Flächengebilde, **dadurch gekennzeichnet, dass** textile Flächengebilde mit Zusammensetzungen gemäß Anspruch 1 beschichtet sind.

## Claims

1. Compositions consisting of
(A) organopolysiloxanes of the general formula Ia
HOR¹₂SiO(R¹₂SiO)ₙSiR¹₂OH (Ia)
where
**R¹** in each occurrence denotes C₁-C₁₀ alkyl, α-phenylethyl, β-phenylethyl, benzyl, 2,4-diethylbenzyl, phenyl and naphthyl, and
N is an integer from 10 to 5 000 and preferably from 100 to 2 000,
(B) organopolysiloxanes having Si-bonded hydrogen atoms,
(C) platinum catalysts,
(D) reinforcing fillers,
(E) optionally nonreinforcing fillers, and
(F) optionally inhibitors to delay a platinumcatalyzed reaction of Si-bonded hydroxyl groups and Si-bonded hydrogen atoms at room temperature,
with the proviso that the organopolysiloxanes (A) have viscosities of 500 to 100 000 000 mPa.s at 25°C,
that the platinum catalysts (C) are free of phosphoramide ligands,
that the reinforcing fillers (D) are included in amounts of at least 3% by weight, based on the total weight of the compositions,
that nonreinforcing fillers (E) are included in smaller amounts than the reinforcing fillers (D).

2. Process for producing the compositions according to Claim 1, **characterized in that** the components (A), (B), (C), (D) and, if used, (E) and (F) according to Claim 1 are mixed with one another.

3. Shaped bodies obtained by allowing the compositions according to Claim 1 to cure.

4. Shaped bodies according to Claim 3, **characterized in that** the curing is effected at temperatures of 50 to 200°C.

5. Shaped bodies according to Claim 3 or 4, **characterized in that** they are coatings or overcoatings.

6. Process for production of coatings by applying the composition according to Claim 1 to the substrate to be coated and then curing the composition.

7. Process according to Claim 6, **characterized in that** the curing is effected at temperatures of 50 to 200°C.

8. Process according to Claim 6 or 7, **characterized in that** the substrate is a textile fabric.

9. Process according to claim 8, **characterized in that** the textile fabric is an airbag material.

10. Coated textile fabrics, **characterized in that** textile fabrics are coated with compositions according to Claim 1.

## Revendications

1. Compositions, constituées par
(A) des organopolysiloxanes de formule générale Ia
HOR¹₂SiO(R¹₂SiO)ₙSiR¹₂OH (Ia)
où
R¹ signifie des radicaux C₁-C₁₀-alkyle, un radical α-phényléthyle et ß-phényléthyle, un radical benzyle, un radical 2,4-diéthylbenzyle, un radical phényle et le radical naphtyle et
n vaut un nombre entier de 10 à 5000, de préférence de 100 à 2000,
(B) des organopolysiloxanes, qui présentent des atomes d'hydrogène liés par Si,
(C) des catalyseurs de platine,
(D) des charges renforçantes,
(E) le cas échéant des charges non renforçantes et
(F) le cas échéant des inhibiteurs, qui ralentissent une réaction catalysée par le platine de groupes hydroxy liés par Si et d'atomes d'hydrogène liés par Si à température ambiante,
à condition que les organopolysiloxanes (A) présentent des viscosités de 500 à 100 000 000 mPa.s à 25°C,
que les catalyseurs de platine (C) soient exempts de ligands de type trisamide de l'acide phosphorique,
que les charges renforçantes (D) soient contenues en des quantités d'au moins 3% en poids par rapport au poids total des compositions,
que des charges non renforçantes (E) soient contenues en des quantités plus faibles que les charges renforçantes (D).

2. Procédé pour la préparation des compositions selon la revendication 1, **caractérisé en ce que** les composants (A), (B), (C), (D) et le cas échéant (E) et (F) selon la revendication 1 soient mélangés les uns avec les autres.

3. Corps façonnés, préparés en ce qu'on laisse se durcir les compositions selon la revendication 1.

4. Corps façonnés selon la revendication 3, **caractérisés en ce que** le durcissement a lieu à des températures de 50 à 200°C.

5. Corps façonnés selon la revendication 3 ou 4, **caractérisés en ce qu'**il s'agit de revêtements ou de recouvrements.

6. Procédé pour la préparation de revêtements par application de la composition selon la revendication 1 sur le substrat à revêtir et durcissement consécutif de la composition.

7. Procédé selon la revendication 6, **caractérisé en ce que** le durcissement a lieu à des températures de 50 à 200°C.

8. Procédé selon la revendication 6 ou 7, **caractérisé en ce que** le substrat est une structure plane textile.

9. Procédé selon la revendication 8, **caractérisé en ce que** la structure plane textile est un matériau pour airbag.

10. Structures planes textiles revêtues, **caractérisées en ce que** les structures planes textiles sont revêtues par les compositions selon la revendication 1.
